# EUROPEAN PATENT SPECIFICATION

(11) **EP 2 349 594 B1**
(45) Date of publication and mention of the grant of the patent: **26.04.2017**
(21) Application number: 09749047.8
(22) Date of filing: 27.10.2009
(51) Int. Cl.: B08B 3/02, B60S 3/00, B65G 25/04, B65G 25/10

(54) **APPARATUS FOR WASHING CART-TYPE OBJECTS**
VORRICHTUNG ZUM WASCHEN VON WAGENARTIGEN OBJEKTEN
APPAREIL POUR LAVER DES OBJETS DE TYPE CHARIOT

(30) Priority: 29.10.2008 IT UD20080228
(43) Date of publication of application: 03.08.2011
(73) Proprietor: STEELCO SPA, 31039 Riese Pio X (IT)
(72) Inventor: ZARDINI, Fabio, I-31033 Castelfranco Veneto (IT)
(74) Representative: Petraz, Davide Luigi
(86) International application number: PCT/EP2009/064104
(87) International publication number: WO 2010/049402

(56) References cited:
- EP-A- 1 918 030
- WO-A-03/002391
- DE-U1- 9 405 334
- FR-A- 848 881
- KR-B1- 100 768 771
- US-A- 4 075 949

## Description

### FIELD OF THE INVENTION

The present invention concerns an apparatus for washing cart-type objects, for example trolleys, beds, bedside tables, other equipment having wheels, and objects in general disposed on suitable trolleys, such as crockery or other objects, in a washing chamber, for example of the type used in hospitals, or in restaurants for washing self service trolleys, or those used on aircraft. By washing chamber we mean, here and hereafter, a chamber in which the cart-type objects can be subjected to at least one of the following treatments: pre-washing in cold and/or hot water, washing in hot water advantageously with detergents, heat-disinfection, with possible final drying, steam washing, washing with disinfection mists based on hydrogen peroxide, or other similar treatments.

### BACKGROUND OF THE INVENTION

Chambers are known, for example those used in hospitals or laboratories, for washing re-usable equipment, such as for example trolleys, beds and similar cart-type equipment provided with wheels or similar movement means.

Known washing chambers are normally provided with an entrance aperture, through which the equipment to be washed is introduced, that is, dirty or containing dirty objects, and with a loading plane, for example a grid, on which the dirty equipment is thrust.

Known washing chambers are also provided with nozzles to deliver jets of cold and/or hot water which, with the aid of suitable detergents, allow for example to wash the equipment disposed on the loading plane. In such washing chambers it is also possible to carry out heat-disinfection by means of superheated water, or other types of washing as mentioned above.

The equipment washed is then removed through an exit aperture, which is normally facing toward a separate zone, advantageously opposite the zone where the dirty equipment is introduced, so as to avoid contact or contamination between dirty equipment and washed equipment. All the operations to insert the dirty equipment and to remove the washed equipment are normally carried out manually by specialized operators. This entails both extensive contact by the operators with the dirty or infected equipment, and also long times for loading and unloading the equipment, and also the fact that the operators are obliged to enter the washing chamber.

One solution that has given an at least partial automation of the operations to insert/remove the equipment into/from the washing chamber is known from EP-A-1918030, in the name of the present Applicant.

Other solutions are known from documents WO-A-03/002391, KR-B-100768771, FR-A-848881, US-A-4075949 and DE-U-9405334.

WO-A-03/002391 discloses a mobile cleaning or washing system for shopping trolleys, having inlet and outlet side of the washing line on the same front face side and provided with corresponding inlet and outlet ramps along which trolleys are manually moved.

KR-B-100768771 and WO-A-2009/011541 disclose a shopping cart washing machine provided with transporting means for continuously transporting said carts in a forward direction across a washing chamber and carts discharging means along an outlet inclined surface.

FR-A-848881 discloses a washing apparatus having a feeding device for transporting objects to be washed across a washing chamber and having a roller way cooperating with rails.

US-A-4075949 discloses an apparatus for intermittently pushing a plurality of aligned carts along a predetermined path.

DE-U-9405334 discloses a pulling mechanism for moving boxes and cartons in shelves and comprising a rotatable bar along a groove in the shelf, said bar having a frictional engagement element with eccentric shape moving along the groove in order to displace said boxes and cartons.

Purpose of the present invention is to further improve the solution proposed in said prior art document, in terms of simplicity, economy and efficiency, both in construction and in functioning.

The Applicant has devised, tested and embodied the present invention to overcome the shortcomings of the state of the art and to obtain these and other purposes and advantages.

### SUMMARY OF THE INVENTION

The present invention is set forth and characterized in the independent claim, while the dependent claims describe other characteristics of the invention or variants to the main inventive idea.

In accordance with the above purpose, a washing apparatus according to the present invention comprises a washing chamber, inside which cart-type objects are able to be washed, such as for example trolleys, beds, bedside tables, other equipment having wheels, and objects in general contained in suitable trolleys and a supporting base on which the cart-type equipments to be washed are positioned.

According to the present invention, the apparatus comprises:
- a first automatic insertion device, which works by pushing and which determines the introduction of the cart-type objects inside the washing chamber along the direction of movement from entrance to exit of the washing chamber, by means of progressive thrust, so as to take them from a loading zone into the washing chamber. The first automatic insertion comprises a thruster element able to translate longitudinally on the supporting base, for selectively contacting a rear edge frame of said cart-type equipment to respectively thrust said cart-type equipment inside said washing chamber and then to reposition itself in the initial start-of-cycle position; and
- a second automatic removal device which works by pulling, so as to remove the cart-type objects from inside the washing chamber and take them to an unloading zone, outside the washing chamber and disposed substantially on the opposite side with respect to the loading zone. Said second removal device comprises an arm disposed during use substantially horizontal, mounted on a slider able to translate on the supporting base in correspondence with the unloading zone.

According to one embodiment of the invention, the apparatus also comprises a slider disposed, in a first position of use, inside the washing chamber, and in cooperation with which the cart-type objects to be washed, or containing the objects to be washed, are disposed inside the washing chamber.

According to this solution, the automatic insertion device, which works by pushing, couples with the slider in the removal step so as to remove it from the washing chamber and take it to the unloading zone and, in association with said coupling action, an interference mechanism is activated which constrains the cart-type objects to the slider, thus causing the removal of the cart-type objects from the washing chamber together with the slider.

The solution according to the invention considerably simplifies the whole construction of automatic movement devices for cart-type objects into/out from the washing chamber, since it uses only two longitudinally translating mechanisms, the first working by pushing and the second working by pulling, in order to insert/remove the cart-type objects into/from the washing chamber.

According to a variant of the invention guide means are provided on the slider on which wheels can run, the wheels being provided on the cart-type objects introduced inside the washing chamber.

The guide means keep the cart-type objects substantially aligned with each other, both in the insertion step and also in the removal step into/from the washing chamber, facilitating said operations even when there is a large number of cart-type objects to be moved simultaneously, and preventing dangerous skidding movements.

According to the invention, the washing apparatus selectively allows to insert or remove the cart-type objects with respect to the washing apparatus in a completely automatic way, reducing or eliminating interventions by operators and also reducing the time taken for the insertion/removal of the objects, advantageously without the operators being obliged to enter the washing chamber, and without any contamination between the loading and unloading zones.

### BRIEF DESCRIPTION OF THE DRAWINGS

These and other characteristics of the present invention will become apparent from the following description of a preferential form of embodiment, given as a non-restrictive example with reference to the attached drawings wherein:
- figs. 1a, 1b and 1c show a sequence, in three distinct steps and in a lateral view, of operations to insert/remove the cart-type objects into/from a washing chamber;
- fig. 2 is a three-dimensional view of a detail of the washing apparatus according to the invention;
- fig. 3 shows a detail of fig. 2.

### DETAILED DESCRIPTION OF A PREFERENTIAL FORM OF EMBODIMENT

With reference to the attached drawings, a washing apparatus 10 according to the present invention can be used, for example in hospitals, to wash cart-type equipment 12.

The washing apparatus 10 comprises a washing chamber 14, of a known type and therefore not described in detail here.

The washing chamber 14 is provided with an entrance aperture 16 through which, from a first zone or loading zone 80, the dirty equipment 12 is introduced, and an exit aperture 18 through which the washed equipment 12 is removed, to a second zone, or unloading zone 82, opposite the loading zone 80. The entrance aperture 16 and the exit aperture 18 are provided with watertight closing elements of a known type, able to be selectively activated so as to achieve a watertight closing of the washing chamber 14 during the washing operations.

The washing apparatus 10 also comprises two movement devices, respectively an insertion device 20 used to introduce the cart-type equipment 12 inside the washing chamber 14, and a removal device 22, used to remove the cart-type equipment 12 from the washing chamber 14 once the relative treatment is finished.

The washing apparatus 10 also comprises a slider 24, with wheels 30 and having during use an operating position disposed inside the washing chamber 14, and on which the cart-type equipment 12 is substantially disposed when it is inside the washing chamber 14.

The slider 24, substantially in a median position, comprises a rotary bar 40. The bar 40 has its front end 41, in the direction of movement from entrance to exit of the washing chamber 14, at least partly hollow and equipped with an eyelet 42, whereas at its rear end the bar 40 is equipped with a knob 43.

The functions of the eyelet 42 and knob 43 will be described in more detail hereafter.

The slider 24 is removed from the washing chamber 14, together with the cart-type equipment 12, as described hereafter, and is then re-introduced again inside the chamber 14 before a new cycle is started.

The insertion device 20 is substantially positioned in the loading zone 80. It comprises a thruster element 21 able to translate longitudinally with respect to a supporting base 34, toward and away from the washing chamber 14 so as to respectively thrust the cart-type equipment 12 inside the washing chamber 14 and then reposition itself in an initial start-of-cycle position.

More particularly, the thruster element 21 comprises an arm 121, disposed substantially vertical with respect to the supporting base 34 on which the cart-type equipment 12 to be washed is also positioned, and a thrust wing 26 disposed during use at a height that at least interferes with a rear edge of the frame of one cart-type equipment 12.

In the solution shown, the cart-type equipment 12 consist of three trolleys, respectively 112a, 112b, 112c, with wheels 28 and disposed aligned to each other in the direction, from left to right in the drawings, which goes from the washing chamber 14 to the loading zone 80.

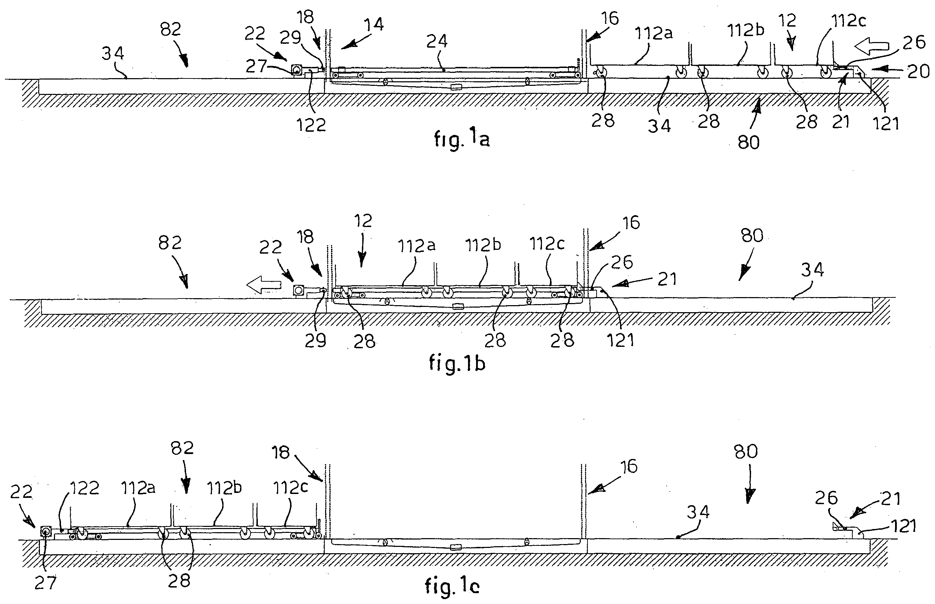

The thruster element 21 is positioned, at start-of-cycle, behind the trolley farthest from the washing chamber 14, in this case trolley 112c, and the thrust wing 26 is positioned in contact with the rear edge of the frame of said trolley 112c (fig. 1a).

At this point, the thruster element 21 is translated longitudinally so as to thrust all three trolleys 112a, 112b, 112c inside the washing chamber 14 (fig. 1b).

When introduction is complete, the thruster element 21 translates backward so as to reposition itself in the start-of-cycle position (fig. 1c).

In a preferential embodiment, not shown here, the thruster element 21 can selectively assume a retracted position under the supporting base 34, to allow the positioning of the trolleys 112a, 112b, 112c or other cart-type equipment 12 in the loading zone 80.

In another preferential embodiment, not shown, the thruster element 21 is of the oscillating type, when thrust in the direction toward the washing chamber 14, so that a trolley to be positioned in the loading zone 80 can pass beyond it so as to move in front of it, and allow the subsequent thrust intended to introduce it into the washing chamber 14.

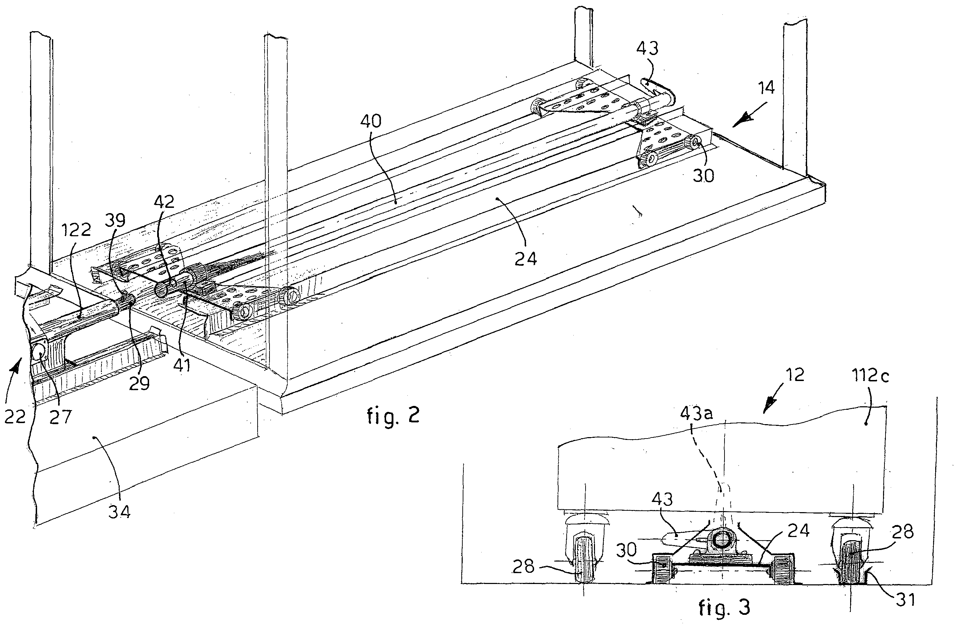

Inside the washing chamber 14 the trolleys 112a, 112b, 112c are positioned substantially above the slider 24, and at least a row of wheels 28 of each of said trolleys is disposed guided on a rail 31 (fig. 3), in order to keep their direction of movement substantially rectilinear during the operations to insert/remove them into/from the washing chamber 14.

In this position, shown in fig. 1b, the trolleys and their contents are subjected to the washing and disinfection treatment, or other treatment provided in the washing chamber 14.

When the treatment is finished, the removal device 22 is activated.

The device 22 substantially comprises an arm 122 disposed substantially horizontal during use, mounted on a little slider 27 able to translate on the supporting base 34 in correspondence with the unloading zone 82. The arm 122 has a tube 29 at the end, protruding therefrom and rotating axially; a substantially transverse pin 38 is made on the tube 29.

When it is necessary to remove the trolleys 112a, 112b, 112c from the washing chamber 14, the slider 27 of the removal device 22 is translated toward the washing chamber 14 so as to take the tube 39 toward the bar 40 of the slider 24, in particular inserting the pin 39 inside the eyelet 42. When the pin 39 is inserted, the tube 39 is rotated for an amount sufficient to make the bar 40 of the slider 24 rotate as well, thus determining, on the one hand, the attachment of the removal device 22 to the slider 24, and on the other hand the rotation by 90° of the knob 43 which, from the horizontal inactive position shown in fig. 2 and as a continuous line in fig. 3, moves to the vertical operating position indicated by a line of dashes in fig. 3.

In fact, in this position the knob 43 interferes with the rear edge of the last trolley 112c so that, when the removal device 22 is driven to move away from the washing chamber 14, the whole group of trolleys is drawn, together with the slider 24, toward the outside of the washing chamber 14. This is thanks to the forward attachment of the pin 39 and eyelet 42, and the rear interference between the knob 43 and the rear trolley 112c.

In this condition, the trolleys 112a, 112b, 112c are removed from the washing chamber 14 and located in the unloading zone 82, as shown in fig. 1c. At this point, an inverse rotation of the tube 29 is enough to dis-engage the slider 24 and the removal device 22, and also to dis-engage the knob 43 from the trolley 112c, so that the trolleys can be discharged and transferred to another zone, for example so they can be filled with other objects to be washed, while the slider 24 can be returned inside the washing chamber 14 by an inverse movement of the slider 27 of the removal device 22.

It is clear that, although the present invention has been described with reference to some specific examples, a person of skill in the art shall certainly be able to achieve many other equivalent forms of apparatus for washing cart-type equipment, having the characteristics as set forth in the claims and hence all coming within the field of protection defined thereby.

## Claims

1. Apparatus for washing cart-type equipment (12; 112a, 112b, 112c) provided with wheels (28), comprising a washing chamber (14) and a supporting base (34) on which the cart-type equipment (12; 112a, 112b, 112c) to be washed is positioned, comprising:
- a first automatic pushing insertion device (20), able to determine the introduction of the cart-type equipment (12; 112a, 112b, 112c) inside the washing chamber (14) along the direction of movement from entrance to exit of the washing chamber (14) by means of a progressive thrust thereof, so as to take the cart-type equipment from a loading zone (80) to inside the washing chamber (14), said first automatic pushing insertion device (20) comprising a thruster element (21, 121) positioned in said loading zone (80) and able to translate longitudinally on the supporting base (34), for selectively contacting a rear edge frame of said cart-type equipment (12; 112a, 112b, 112c) to respectively thrust said cart-type equipment (12; 112a, 112b, 112c) inside said washing chamber (14) and then to reposition itself in the initial start-of-cycle position, and
- a second automatic pulling removal device (22), in order to remove the cart-type equipment (12; 112a, 112b, 112c) from inside the washing chamber (14) to an unloading zone (82) outside said washing chamber (14) and disposed substantially on the opposite side with respect to said loading zone (80), said second automatic pulling removal device (22) comprising an arm (122) disposed during use substantially horizontal, mounted on a slider (27) able to translate on the supporting base (34) in correspondence with the unloading zone (82).

2. Apparatus as in claim 1, **characterized in that** it also comprises a slider (24) disposed in a first position of use inside the washing chamber (14), and in cooperation with which said cart-type equipment (12; 112a, 112b, 112c) to be washed, which may contain objects to be washed, is disposed inside the washing chamber (14).

3. Apparatus as in claim 1 or 2, **characterized in that** said thruster element (21) comprises an arm (121), disposed during use substantially vertical with respect to the supporting base (34) on which the cart-type equipment (12; 112a, 112b, 112c) to be washed is also positioned, and a thruster wing (26) disposed during use at a height at least interfering with a rear edge of one of said cart-type equipment (12; 112a, 112b, 112c).

4. Apparatus as in claim 3, **characterized in that** said thruster element (21) has a first operating position, at start-of-cycle, disposed behind the cart-type equipment (12; 112a, 112b, 112c) farthest from the washing chamber (14), in which said thrust wing (26) is positioned in contact with the rear edge of said cart-type object (12; 112a, 112b, 112c), and at least a second operating position translated longitudinally with respect to said first operating position in order to thrust said cart-type equipment (12; 112a, 112b, 112c) inside the washing chamber (14).

5. Apparatus as in any claim hereinbefore, **characterized in that** said thruster element (21) has at least a selectively retracted position below the supporting base (34), at least to allow the positioning of the cart-type equipment (12; 112a, 112b, 112c) in said loading zone (80).

6. Apparatus as in any claim from 1 to 4, **characterized in that** said thruster element (21) is of the oscillating type, when thrust in the direction toward the washing chamber (14), so that a trolley to be positioned in the loading zone (80) can pass beyond it in order to move in front of it.

7. Apparatus as in any claim hereinbefore, **characterized in that** said arm (122) comprises a tube (29) at the end, protruding therefrom and rotating axially, on which tube (29) a substantially transverse pin (38) is made.

8. Apparatus as in claim 2, **characterized in that** said slider (24) comprises a rotary bar (40), having its front end (41), in the direction of movement from entrance to exit of the washing chamber (14), at least partly hollow and equipped with an eyelet (42), whereas at its rear end the rotary bar (40) is equipped with a knob (43).

9. Apparatus as in claims 7 and 8, **characterized in that** said pin (38) has a first position inserted in said eyelet (42), and a second position, axially rotated with respect to said first position, in which it determines the attachment of said automatic pulling removal device (22) and said slider (24) and determines an at least partial rotation of said rotary bar (40).

10. Apparatus as in claim 9, **characterized in that** said second position of said pin (38) is correlated to the positioning of said knob (43) in an operating position in which said slider (24) and the cart-type equipment (12; 112a, 112b, 112c) mounted thereon are reciprocally constrained.

11. Apparatus as in claim 2 or in any claim from 8 to 10, **characterized in that** inside the washing chamber (14) is comprised a rail (31) for disposing guided at least a row of wheels (28) of each of said cart-type equipment (12; 112a; 112b; 112c) positioned substantially above the slider (24).

## Patentansprüche

1. Vorrichtung zum Waschen einer wagenartigen Ausrüstung (12; 112a, 112b, 112c), die mit Rädern (28) versehen ist, aufweisend eine Waschkammer (14) und eine Trägerbasis (34), auf der die zu waschende wagenartige Ausrüstung (12; 112a, 112b, 112c) positioniert ist, aufweisend
- eine erste automatische schiebende Einführvorrichtung (20), die in der Lage ist, das Einbringen der wagenartigen Ausrüstung (12; 112a, 112b, 112c) in die Waschkammer (14) entlang der Bewegungsrichtung vom Eingang zum Ausgang der Waschkammer (14) durch ein allmähliches Vorschieben von dieser zu bestimmen, um die wagenartige Ausrüstung von einer Ladezone (80) in die Waschkammer (14) zu überführen, wobei die erste automatische schiebende Einführvorrichtung (20) ein Vorschubelement (21, 121) aufweist, das in der Ladezone (80) positioniert und in der Lage ist, sich längs auf der Trägerbasis (34) zu verschieben, um selektiv einen hinteren Kantenrahmen der wagenartigen Ausrüstung (12; 112a, 112b, 112c) zu kontaktieren, um jeweils die wagenartige Ausrüstung (12; 112a, 112b, 112c) in die Waschkammer (14) vorzuschieben und sich dann selbst wieder in der anfänglichen Zyklusstartposition zu positionieren, und
- eine zweite automatische ziehende Entnahmevorrichtung (22), um die wagenartige Ausrüstung (12; 112a, 112b, 112c) aus dem Inneren der Waschkammer (14) zu einer Entladezone (82) außerhalb der Waschkammer (14), die sich im Wesentlichen auf der entgegengesetzten Seite in Bezug auf die Ladezone (80) befindet, zu entnehmen, wobei die zweite automatische ziehende Entnahmevorrichtung (22) einen Arm (122) aufweist, der bei Verwendung im Wesentlichen horizontal angeordnet ist und der auf einem Gleitstück (27) montiert ist, das in der Lage ist, sich auf der Trägerbasis (34) entsprechend der Entladezone (82) zu bewegen.

2. Vorrichtung nach Anspruch 1, **dadurch gekennzeichnet, dass** sie auch ein Gleitstück (24) aufweist, das in einer ersten Gebrauchsposition in der Waschkammer (14) angeordnet ist, und in Zusammenwirkung mit welchem die zu waschende wagenartige Ausrüstung (12; 112a, 112b, 112c), die zu waschende Gegenstände enthalten kann, in der Waschkammer (14) angeordnet ist.

3. Vorrichtung nach Anspruch 1 oder 2, **dadurch gekennzeichnet, dass** das Vorschubelement (21) einen Arm (121), der bei Verwendung im Wesentlichen vertikal in Bezug auf die Trägerbasis (34), auf welcher auch die zu waschende wagenartige Ausrüstung (12; 112a, 112b, 112c) positioniert ist, angeordnet ist, und einen Vorschubflügel (26) aufweist, der bei Verwendung in einer Höhe angeordnet ist, die zumindest mit einer hinteren Kante einer der wagenartigen Ausrüstung (12; 112a, 112b, 112c) interferiert.

4. Vorrichtung nach Anspruch 3, **dadurch gekennzeichnet, dass** das Vorschubelement (21) eine erste Betriebsposition zu Beginn des Zyklus aufweist, die hinter der wagenartigen Ausrüstung (12; 112a, 112b, 112c) von der Waschkammer (14) am Weitesten entfernt angeordnet ist, wobei der Vorschubflügel (26) in Kontakt mit der hinteren Kante des wagenartigen Gegenstands (12; 112a, 112b, 112c) positioniert ist, und mindestens eine zweite Betriebsposition aufweist, die in Längsrichtung in Bezug auf die erste Betriebsposition verschoben ist, um die wagenartige Ausrüstung (12; 112a, 112b, 112c) in der Waschkammer (14) vorzuschieben.

5. Vorrichtung nach einem der vorhergehenden Ansprüche, **dadurch gekennzeichnet, dass** das Vorschubelement (21) mindestens eine selektiv zurückgezogene Position unterhalb der Trägerbasis (34) aufweist, zumindest um die Positionierung der wagenartigen Ausrüstung (12; 112a, 112b, 112c) in der Ladezone (80) zu gestatten.

6. Vorrichtung nach einem der Ansprüche 1 bis 4, **dadurch gekennzeichnet, dass** das Vorschubelement (21) vom oszillierenden Typ ist, wenn es in Richtung zur Waschkammer (14) vorgeschoben wird, so dass ein in der Ladezone (80) zu positionierender Wagen jenseits von diesem passieren kann, um sich vor diesem zu bewegen.

7. Vorrichtung nach einem der vorhergehenden Ansprüche, **dadurch gekennzeichnet, dass** der Arm (122) ein Rohr (29) am Ende aufweist, das von diesem vorsteht und sich axial dreht, wobei auf dem Rohr (29) ein im Wesentlichen transversaler Stift (38) gebildet ist.

8. Vorrichtung nach Anspruch 2, **dadurch gekennzeichnet, dass** das Gleitstück (24) eine Drehstange (40) aufweist, deren vorderes Ende (41), in Bewegungsrichtung vom Eingang zum Ausgang der Waschkammer (14), zumindest teilweise hohl und mit einer Öse (42) versehen ist, während die Drehstange (40) an ihrem hinteren Ende mit einem Knopf (43) versehen ist.

9. Vorrichtung nach den Ansprüchen 7 und 8, **dadurch gekennzeichnet, dass** der Stift (38) eine erste Position in die Öse (42) eingeführt und eine zweite Position axial gedreht in Bezug auf die erste Position aufweist, in der sie die Anbringung der automatischen ziehenden Entnahmevorrichtung (22) und des Gleitstücks (24) bestimmt und eine zumindest teilweise Drehung der Drehstange (40) bestimmt.

10. Vorrichtung nach Anspruch 9, **dadurch gekennzeichnet, dass** die zweite Position des Stifts (38) mit der Positionierung des Knopfes (43) in einer Betriebsposition (24) in Wechselbeziehung steht, in der das Gleitstück (24) und die darauf montierte wagenartige Ausrüstung (12; 112a, 112b, 112c) ineinander eingreifen.

11. Vorrichtung nach Anspruch 2 oder einem der Ansprüche 8 bis 10, **dadurch gekennzeichnet, dass** in der Waschkammer (14) eine Schiene (31) zum geführten Anordnen von mindestens einer Reihe von Rädern (28) von jeder der wagenartigen Ausrüstung (12; 112a, 112b, 112c) enthalten ist, die im Wesentlichen über dem Gleitstück (24) positioniert ist.

## Revendications

1. Appareil pour laver des équipements de type chariot (12 ; 112a, 112b, 112c) équipés de roues (28), comprenant une chambre de lavage (14), et une base de support (34) sur laquelle sont placés les équipements de type chariot (12 ; 112a, 112b, 112c) à laver, comprenant
- un premier dispositif d'introduction automatique par poussée (20) capable de faire entrer les équipements de type chariot (12 ; 112a, 112b, 112c) dans la chambre de lavage (14) le long de la direction de mouvement de l'entrée à la sortie de la chambre de lavage (14) au moyen d'une poussée progressive sur celui-ci, de manière à amener les équipements de type chariot à partir d'une zone de chargement (80) jusqu'à l'intérieur de la chambre de lavage (14), ledit premier dispositif d'introduction automatique par poussée (20) comprenant un élément de poussée (21, 121) situé dans ladite zone de chargement (80) et pouvant translater en direction longitudinale sur la base de support (34) pour venir en contact sélectif avec un châssis de bord arrière desdits équipements de type chariot (12 ; 112a, 112b, 112c) pour pousser respectivement lesdits équipements de type chariot (12 ; 112a, 112b, 112c) à l'intérieur de ladite chambre de lavage (14) et pour la repositionner en suite dans la position initiale de début de cycle, et
- un second dispositif de retrait automatique par traction (22), pour faire sortir les équipements de type chariot (12 ; 112a, 112b, 112c) de l'intérieur de la chambre de lavage (14) vers une zone d'évacuation (82) à l'extérieur de ladite chambre de lavage (14), et placé sensiblement sur le côté opposé à ladite zone de chargement (80), ledit second dispositif de retrait automatique par traction (22) comprenant un bras (122), orienté dans une direction sensiblement horizontale pendant l'emploi, monté sur un curseur (27) capable de translater sur la base de support (34) au niveau de la zone d'évacuation (82).

2. Appareil selon la revendication 1, **caractérisé en ce qu'**il comprend également un curseur (24) placé dans une première position d'emploi à l'intérieur de la chambre de lavage (14), lesdits équipements de type chariot (12 ; 112a, 112b, 112c) à laver, pouvant contenir les objets à laver, étant placé en coopération avec celui-ci à l'intérieur de la chambre de lavage (14).

3. Appareil selon la revendication 1 ou 2, **caractérisé en ce que** ledit élément de poussée (21) comprend un bras (121) orienté, pendant l'emploi, dans une position sensiblement verticale par rapport à la base de support (34), sur lequel les équipements de type chariot (12 ; 112a, 112b, 112c) à laver sont aussi situés, et une ailette de poussée (26) située, pendant l'emploi, à une hauteur lui permettant au moins d'interférer avec un bord arrière de l'un desdits équipements de type chariot (12 ; 112a, 112b, 112c).

4. Appareil selon la revendication 3, **caractérisé en ce que** ledit élément de poussée (21) comporte une première position de fonctionnement, en début de cycle, située derrière les équipements de type chariot (12 ; 112a, 112b, 112c), au plus loin de la chambre de lavage (14), dans lequel ladite ailette de poussée (26) est placée en contact avec le bord arrière dudit objet de type chariot (12 ; 112a, 112b, 112c), et au moins une seconde position de fonctionnement déplacée dans une direction longitudinale par rapport à ladite première position de fonctionnement pour pousser lesdits équipements de type chariot (12 ; 112a, 112b, 112c) à l'intérieur de ladite chambre de lavage (14).

5. Appareil selon n'importe laquelle des revendications précédentes, **caractérisé en ce que** ledit élément de poussée (21) comporte au moins une position sélectivement retirée au-dessous de la base de support (34) au moins pour permettre de positionner les équipements de type chariot (12 ; 112a, 112B, 112c) dans ladite zone de chargement (80).

6. Appareil selon n'importe laquelle des revendications 1 à 4, **caractérisé en ce que** ledit élément de poussée (21) est de type basculant, lorsqu'il est poussé vers la chambre de lavage (14), de manière qu'un chariot à placer dans la zone de chargement (80) peut le dépasser pour se trouver en face de celui-ci.

7. Appareil selon n'importe laquelle des revendications précédentes, **caractérisé en ce que** ledit bras (122) comprend un tuyau (29) à son extrémité, faisant saillie de celui-ci et tournant dans une direction axiale, une goupille sensiblement transversale (38) étant formée sur ledit tuyau (29).

8. Appareil selon la revendication 2, **caractérisé en ce que** ledit curseur (24) comprend une barre rotative (40), dont l'extrémité avant (41), dans la direction de mouvement de l'entrée à la sortie de la chambre de lavage (14) est au moins en partie creuse et pourvue d'un oeillet (42), alors qu'à l'extrémité arrière la barre rotative (40) est pourvue d'un bouton (43).

9. Appareil selon les revendications 7 e 8, **caractérisé en ce que** ladite goupille (38) a une première position insérée dans ledit oeillet (42), et une seconde position, tournée en direction axiale par rapport à ladite première position, dans laquelle il cause la fixation dudit dispositif de retrait automatique par traction (22) et dudit curseur (24) et cause une rotation au moins partielle de ladite barre rotative (40).

10. Appareil selon la revendication 9, **caractérisé en ce que** ladite seconde position de ladite goupille (38) est corrélée à la position dudit bouton (43), dont une position de fonctionnement comporte la contrainte réciproque dudit curseur (24) et des équipements de type chariot (12 ; 112a, 112b, 112c) montés sur celui-ci.

11. Appareil selon la revendication 2 ou selon n'importe laquelle des revendications 8 à 10, **caractérisé en ce qu'**un rail (31) est situé à l'intérieur de la chambre de lavage (14) pour agencer en condition de guidage au moins une rangée de roues (28) de chacun desdits équipements de type chariot (12 ; 112a, 112b, 112c) sensiblement au-dessus du curseur (24).
